# FASCICULE DE BREVET EUROPEEN

(11) **EP 1 497 986 B1**
(45) Date de publication et mention de la délivrance du brevet: **01.08.2012**
(21) Numéro de dépôt: 03712576.2
(22) Date de dépôt: 15.04.2003
(51) Int. Cl.: H04N 21/418, H04N 21/4147, H04N 21/4405, H04N 21/4408, H04N 21/426

(54) **METHODE DE GESTION DES DROITS D'UN CONTENU ENCRYPTE ET STOCKE SUR UN ENREGISTREUR NUMERIQUE PERSONNEL**
SYSTEM ZUR VERWALTUNG VON RECHTEN ZUM VERSCHLÜSSELTEN UND AUF EINEM PERSÖNLICHEN DIGITALEN AUFNAHMEGERÄT GESPEICHERTEN INHALT
METHOD FOR MANAGING THE RIGHTS OF AN ENCRYPTED CONTENT STORED ON A PERSONAL DIGITAL RECORDER

(30) Priorité: 19.04.2002 CH 664022002
(43) Date de publication de la demande: 19.01.2005
(73) Titulaire: Nagravision SA, 1033 Cheseaux-sur-Lausanne (CH)
(72) Inventeur: SASSELLI, Marco, CH-1803 Chardonne (CH)
(74) Mandataire: Wenger, Joel-Théophile
(86) Numéro de dépôt international: PCT/IB2003/001514
(87) Numéro de publication internationale: WO 2003/090465

(56) Documents cités:
- EP-A- 0 866 615
- EP-A- 0 936 774
- EP-A- 0 975 165
- "FUNCTIONAL MODEL OF A CONDITIONAL ACCESS SYSTEM" EBU REVIEW- TECHNICAL, EUROPEAN BROADCASTING UNION. BRUSSELS, BE, no. 266, 21 décembre 1995 (1995-12-21), pages 64-77, XP000559450 ISSN: 0251-0936

## Description

La présente demande concerne le domaine des récepteurs/décodeurs de services à accès conditionnel, en particulier des récepteurs disposant d'unité de stockage tels que disques durs.

L'évolution technologique dans le domaine des capacités de stockage et de la rapidité des disques magnétiques (disque dur) a fait qu'il est devenu possible de stocker du contenu vidéo télédiffusé pour l'accéder en différé par l'utilisateur.

De tels enregistreurs sont connus sous la marque ReplayTV^{®} ou Tivo^{®} et proposent des stockages de plusieurs dizaines d'heures de transmission numérique. Ces enregistreurs ne sont toutefois pas directement intégrés aux récepteurs/décodeurs de services à accès conditionnel; en particulier, le contenu est stocké sans protection particulière sur le disque, ce qui rend impossible la collecte des droits d'auteur associés au contenu, dans le cas où le disque serait ensuite dupliqué à des fins de redistribution commerciale. De plus, l'accès au contenu

A l'inverse, dans un système de télévision numérique à péage, le flux numérique transmis vers ces récepteurs est encrypté afin de pouvoir en contrôler l'utilisation et de définir des conditions pour une telle utilisation. Cette encryption est réalisée grâce à des mots de contrôle (Control Words) qui sont changés à intervalle régulier (typiquement entre 5 et 30 secondes) afin de dissuader toute attaque visant à retrouver un tel mot de contrôle.

Selon un mode de réalisation particulier, les mots de contrôle sont changés à des intervalles beaucoup plus long ce qui signifie que pour un événement considéré, il est encrypté par un seul mot de contrôle. Pour que le récepteur puisse décrypter le flux encrypté par ces mots de contrôle, ces derniers lui sont envoyés indépendamment du flux dans des messages de contrôle (ECM) encryptés par une clé propre au système de transmission entre le centre de gestion (CAS) et le module de sécurité de l'unité d'utilisateur. En effet, les opérations de sécurité sont effectuées dans une unité de sécurité (SC) qui est généralement sous la forme d'une carte à puce, réputée inviolable. Cette unité peut être soit de type amovible ou directement intégrée au récepteur.

Lors de la décryption d'un message de contrôle (ECM), il est vérifié, dans l'unité de sécurité (SC), que le droit pour accéder au flux considéré est présent. Ce droit peut être géré par des messages d'autorisation (EMM) qui chargent un tel droit dans l'unité de sécurité (SC). D'autres possibilités sont également possibles tels que l'envoi de clés de décryptage.

Pour la suite de l'exposé, on appellera "événement" un contenu vidéo, audio (par exemple MP3) ou données (programme de jeu par exemple) qui est encrypté selon la méthode connue des mots de contrôle, chaque événement pouvant être encrypté par un ou une plusieurs mots de contrôle, chacun ayant une durée de validité déterminée.

La comptabilisation de l'utilisation de tels événements est aujourd'hui basée sur le principe de l'abonnement, de l'achat d'événements ou du paiement par unité de temps.

L'abonnement permet de définir un droit associé à un ou des canaux de diffusion transmettant ces événements et permet à l'utilisateur d'obtenir ces canaux en clair si le droit est présent dans son unité de sécurité.

Parallèlement, il est possible de définir des droits propres à un événement, tel qu'un film ou un match de football. L'utilisateur peut acquérir ce droit (achat par exemple) et cet événement sera spécifiquement géré par ce droit. Cette méthode est connue sous l'appellation "pay-per-view" (PPV).

Pour ce qui concerne le paiement par unité de temps, l'unité de sécurité comprend un crédit qui est débité en fonction de la consommation réelle de l'utilisateur. Ainsi par exemple, une unité sera débitée chaque minute à ce crédit quelque soit le canal ou l'événement regardé. Il est possible selon les implémentations techniques, de varier l'unité de comptabilisation, soit dans la durée, soit dans la valeur du temps alloué, voire en combinant ces deux paramètres pour adapter la facturation au type d'événement transmis.

Un message de contrôle (ECM) ne contient pas uniquement le mot de contrôle mais également les conditions pour que ce mot soit renvoyé au récepteur/décodeur. Lors du décryptage des mots de contrôle, il sera vérifié si un droit associé aux conditions d'accès énoncées dans le message est présent dans l'unité de sécurité.

Le mot de contrôle n'est retourné à l'unité d'utilisateur que lorsque la comparaison est positive. Ce mot de contrôle est contenu dans un message de contrôle ECM qui est encrypté par une clé de transmission TK.

Pour que le droit soit présent dans l'unité de sécurité, il est généralement chargé dans cette unité par un message de gestion de droit (EMM) qui pour des raisons de sécurité, est généralement encrypté par une clé différente dite clé de droit (RK).

Selon une forme connue de diffusion de télévision à péage, les trois éléments suivants sont nécessaires pour décrypter un événement à un moment donné:
- l'événement encrypté par un ou une pluralité de mots de contrôle (CW),
- le ou les messages de contrôle ECM contenant les mots de contrôle (CW) et les conditions d'accès (AC)
- le droit correspondant stocké dans l'unité de sécurité permettant de vérifier les dites conditions d'accès.

Selon un schéma connu, l'événement encrypté qui est stocké sur une unité de stockage telle qu'un disque dur, est accompagné au moins du ou des messages de contrôle ECM.

Du fait que le décryptage à posteriori des messages ECM peut poser un problème, en particulier à cause du changement de la clé de transmission, une première solution est proposée dans le document EP 0 912 052, solution qui implique la décryption de ces messages dans l'unité de sécurité et la ré-encryption avant le stockage sur le disque. Cette solution est également décrite dans la demande EP 0 975 165.

Cette solution résout le problème de la durée de vie de la clé de transmission (changement de clés) mais charge grandement l'unité de sécurité au moment de l'enregistrement, sans savoir si le contenu enregistré sera un jour utilisé. De plus, une des règles fondamentales du système de sécurité est de ne retourner à l'unité d'utilisateur les mots de contrôle que si les droits existent. Dans ce cas, il se peut fort que ces droits n'existent pas si l'on considère un achat par événement. Le droit sera acquis lors de l'achat qui peut se faire bien plus tard au moment où l'utilisateur décide de visualiser cet événement.

Ce document EP 0 912 052 ne résout pas le problème de l'accès au droit car au moment de l'achat, le message de droit EMM doit être toujours diffusé pour qu'il soit chargé dans l'unité de sécurité.

Ainsi, la solution décrite dans ce document n'est applicable que pour des événements diffusés pour lesquels le droit est déjà présent dans l'unité de sécurité afin d'autoriser la décryption et la ré-encryption des ECM.

Un autre aspect est la conservation des droits d'un titulaire. Prenons l'exemple où un titulaire A dispose des droits de réception des canaux M, N, P. Il a donc le droit de visualiser ces canaux et donc d'enregistrer et de visualiser à volonté les événements se trouvant sur son unité de stockage. A chaque utilisation d'un tel événement, l'unité de sécurité va être sollicitée pour décrypter les messages ECM et retourner les mots de contrôle. Il est dès lors important que les droits liés à cet événement soient présents dans l'unité de sécurité.

Dans le cas d'un événement obtenu grâce à un abonnement, l'identification de cet événement est associée au canal de l'abonnement, par exemple M. Ainsi tous les événements portant l'identifiant M sont autorisés et les mots de contrôle retournés au décodeur.

Ces droits sont donc associés à un canal particulier défini par un identifiant tel que M. Lorsque l'abonné résilie son abonnement, ou le modifie pour d'autres canaux, il est résulte que les événements enregistrés sur l'unité de stockage seront inaccessibles car l'unité de sécurité refusera de renvoyer les mots de contrôle, le droit correspondant n'étant plus présent.

Cette situation peut se produire également si le canal M se voit attribuer un nouvel identifiant. Il est ainsi possible que la réorganisation des canaux fasse que ce canal se retrouve avec l'identifiant J4 au lieu de M. Du point de vu des droits de diffusion, l'unité de sécurité en est informée en temps utile et aucun désagrément n'est constaté par l'utilisateur.

Par contre, les conséquences pour un événement enregistré sont plus dramatiques. Cette réassignation aura tout simplement pour conséquence que l'événement enregistré sera inaccessible car le droit correspondant n'est plus présent dans l'unité de sécurité.

Un exemple d'un tel dispositif est décrit dans la demande de brevet européen EP 0 936 774. Ce dispositif est en particulier destiné à recevoir des fichiers musicaux. Chaque fichier est associé à une clé spécifique. De même, chaque dispositif récepteur dispose de sa propre clé. Lorsqu'un récepteur sollicite l'envoi d'un morceau musical, le fichier correspondant est chiffré au moyen de la clé spécifique à ce morceau. La clé du morceau est ensuite envoyée au récepteur sous forme chiffrée par la clé du récepteur.

Dans ce dispositif, aussi longtemps que la clé du récepteur ne change pas, les fichiers mémorisés dans ce récepteur sont accessibles. Par contre, dès qu'il y a un changement de clé, les fichiers ne sont plus accessibles. Ce dispositif n'assure donc pas la pérennité de l'accès aux fichiers en cas e changement de paramètres liés au système.

Le but de la présente invention est de proposer une méthode de stockage d'un événement encrypté par des mots de contrôle (CW) qui garantisse l'accès à cet événement à n'importe quel moment, même si certaines modifications dans la désignation des identifiants de ces événements sont intervenues entre le moment du stockage et le moment de la visualisation.

Ce but est atteint par une méthode de stockage d'un événement encrypté par un ou des mots de contrôle (CW) dans une unité de réception et de décryptage (STB) connectée à une unité de sécurité (SC), ces mots de contrôle (CW) et les droits nécessaires étant contenus dans des messages de contrôle (ECM), caractérisée en ce qu'elle comprend les étapes suivantes:
- à stocker l'événement encrypté ainsi que les messages de contrôle (ECM) sur l'unité de stockage,
- à transmettre à l'unité de sécurité (SC) les messages de contrôle (ECM),
- à vérifier si les droits d'accès à cet événement sont contenus dans l'unité de sécurité (SC),
- à déterminer une quittance (Q) sur tout ou partie du message de contrôle (ECM) grâce à une clé secrète (K) contenue dans l'unité de sécurité (SC) et propre à chaque unité de sécurité,
- à stocker cette quittance (Q) sur l'unité de stockage.

Selon une première variante de l'invention, cette quittance est constituée par une signature sur tout ou partie du message de contrôle et constitue un super droit qui permettra lors de l'utilisation subséquente de l'événement, de vérifier prioritairement cette quittance avant de vérifier les droits usuels dans l'unité de sécurité. La présence de cette quittance, une fois reconnue pour un message de contrôle donné, permet d'ignorer les conditions d'accès.

Selon une deuxième variante de l'invention, lors de la génération de la quittance, en plus de la signature, une nouvelle partie est ajoutée qui décrit comment traiter ce message de contrôle lorsqu'il sera présenté à l'unité de sécurité. Cette condition peut être d'ignorer toutes les conditions énoncées dans ce message (ce qui revient à la solution précédente) ou énoncer d'autres conditions telles que de disposer d'un droit de reproduction ou définir une fenêtre en temps pour autoriser une telle reproduction.

Pour déterminer la signature, on va de préférence prendre une partie qui est inchangée pour tout l'événement. En effet, le message ECM comprend schématiquement deux parties:
a. le mot de contrôle pour le décryptage (ou les mots pair et impair)
b. le droit nécessaire pour retourner ce mot de contrôle.

Cette quittance permet de marquer un message de contrôle et donc d'ajouter d'autres informations destinées au traitement en mode reproduction. Le but est donc d'identifier un message de contrôle d'une manière indubitable. Dans la pratique, on constate que la partie b, soit le droit nécessaire, change moins fréquemment que le mot de contrôle. C'est pourquoi on choisira de préférence cette partie pour calculer la signature. Néanmoins, il n'est pas exclu de déterminer la signature sur le mot de contrôle, ou l'ensemble des deux parties.

Pour le calcul de cette signature, on détermine une image unique de la partie considérée par une fonction unidirectionnelle et sans collision sur ces données. Il est admis qu'il n'existe pas d'ensemble de données différent qui donne le même résultat que cette fonction. Cette image H est produite par une fonction de type Hash. L'algorithme utilisé peut être de type SHA-1 ou MD5 et cette image exprime l'ensemble des données d'une manière unique.

L'opération suivante consiste à encrypter ces données grâce à une clé d'encryption K.

Avant l'opération d'encryption, par la clé K, il est possible d'ajouter un champ de données CD qui décrit des nouvelles conditions d'accès. L'ensemble de ces données (H et CD) constituant le quittance est ensuite encrypté par la clé de signature K.

Dans l'esprit de l'invention, le terme quittance signifie que l'on détermine un ensemble de données représentatif des conditions d'accès (par exemple dans le cas le plus simple) et unique à une unité de sécurité concernée grâce à la clé d'encryption K. Selon une forme de réalisation, il est possible d'encrypter directement les conditions d'accès du message de contrôle ECM par cette clé sans passer par l'opération de Hash. Selon une autre forme de réalisation, il est possible de déterminer cette image unique (fonction Hash) sur les conditions d'accès puis de crypter cette image par une première clé K1, ajouter les nouvelles conditions d'accès CD et d'encrypter le tout avec la même clé K1 ou une seconde clé K2.

L'invention sera mieux comprise grâce à la description détaillée qui va suivre et qui se réfère aux dessins annexés qui sont donnés à titre d'exemple nullement limitatif, à savoir:
- la figure 1 décrit une unité d'utilisateur STB avec unité de stockage,
- la figure 2, décrit l'ensemble des données stockées sur l'unité de stockage,
- la figure 3 décrit la structure d'un message de contrôle ECM.

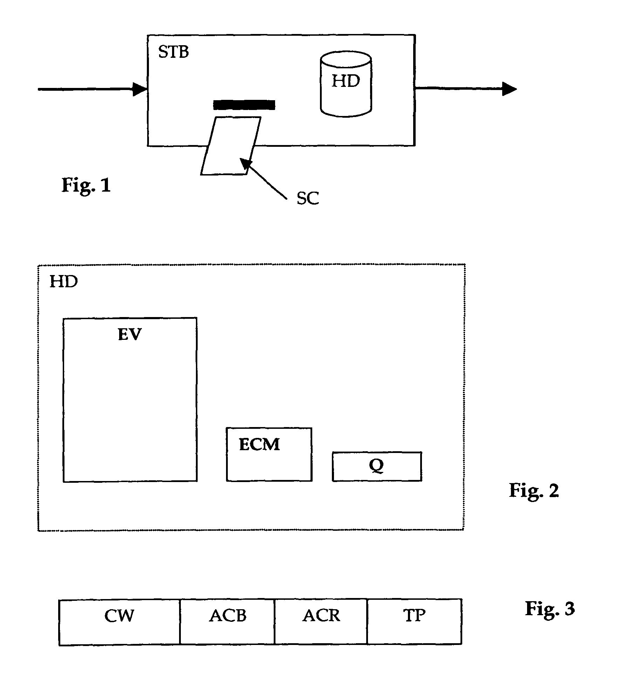

Le décodeur STB illustré à la figure 1 reçoit des données en entrée sous forme encryptées. Ces données sont stockées dans l'unité de stockage HD et comprennent notamment l'événement considéré EV et les messages de contrôle ECM.

Ainsi, selon l'invention, ces deux ensemble de données sont accompagnés par un nouvel ensemble qui est illustré sur la figure 2 par le bloc de quittance Q.

La taille des différents blocs est donnée ici pour exemple. On peut néanmoins considérer que l'événement EV occupe la majeure partie, les messages de contrôle ECM une petite partie et selon une forme de réalisation, une seule quittance suffit pour l'ensemble de ces données.

En effet, si cette signature est effectuée sur la partie des conditions d'accès du message de contrôle, elle ne va pas varier pour tout l'événement considéré.

Sur la figure 3 est illustré la structure d'un message de contrôle ECM. Ce message contient, comme décrit précédemment, le mot de contrôle CW et les conditions d'accès. Ces conditions sont divisées en deux parties, une partie propre aux conditions de diffusion ACB et une partie propre aux conditions de reproduction ACR. Ce message comprend également une marque temps TP.

Parmi ces conditions, on peut trouver :
- numéro du canal (ou services), particulièrement utile pour l'abonnement,
- le thème de l'événement (par ex. sport, nouvelles, adulte)
- le niveau (prime time, après-midi, rediffusion)
- un numéro pour achat impulsif.

La duplication des conditions ouvre des possibilités à la gestion de l'événement lors de la reproduction. La quittance Q peut signifier qu'il est nécessaire de se conformer simplement aux conditions de reproduction ou alors signifier au contraire ignorer ces conditions.

Prenons l'exemple d'une fonction de blocage géographique. Cette fonction permet de bloquer la réception d'un événement sportif par exemple dans les 30 km autour du stade. Si ce blocage à un sens au moment de l'événement, par contre quelque jours plus tard, il n'a plus de raison d'être.

Dans les conditions de diffusion ACB, l'on trouvera les conditions du blocage par tranche de numéros d'unité de sécurité ou par code postal. Pour ce qui concerne les conditions de reproduction ACR, l'on trouvera une simple autorisation pour tous à partir d'une certaine date (pour autant que les autres conditions tels qu'abonnement, soient remplies).

Lors de la reproduction, la quittance Q est chargée en premier et décryptée par la clé secrète K, pour obtenir la signature SGN et les nouvelles conditions d'accès CD.

La signature SGN est ensuite conservée dans la mémoire de l'unité de sécurité avec les nouvelles conditions CD. Lorsque l'on présente un message de contrôle ECM à l'unité de sécurité, elle détermine par la fonction Hash une image unique H' sur la partie des droits AC selon cet exemple et compare cette valeur H' avec la signature SGN.

Si les deux valeurs sont identiques, l'unité de sécurité applique les conditions énoncées dans la partie conditions CD de la quittance. Si cette condition CD signifie "accès libre", cela permet de ne plus vérifier les conditions contenues dans le message de contrôle ECM et donc permet de s'affranchir de tous les changements structurels des canaux de diffusion.

Selon un autre exemple d'application, la nouvelle condition CD renvoie aux conditions de reproduction ACR. Dans ces conditions l'on ne trouve plus de référence à des canaux, ou autres éléments qui pourraient varier dans le temps (conditions structurelles) mais des conditions sur le temps durant lequel cet accès est accordé ou un nombre de fois. On sous-entend dans ce cas que les conditions d'accès liés à un abonnement ou autres ont été vérifiées lors de la formation de la quittance.

La quittance peut être évolutive. Dans certain cas il peut être intéressant de stocker une nouvelle quittance plus favorable que l'ancienne: Ceci est le cas notamment lors d'un achat impulsif. Dans ce cas une première quittance est générée lors du stockage sans que l'utilisateur n'aie acheté cet événement.

Les conditions contenues dans cette quittance vont renvoyer aux conditions contenues dans le message de contrôle ECM.

Au moment où l'utilisateur décide d'acheter cet événement, une nouvelle quittance est générée qui ouvre la voie à une utilisation sans réserve de cet événement si les conditions sont définies comme telles. Cette quittance est alors transmise à l'unité de stockage pour remplacer l'ancienne.

## Revendications

1. Méthode de stockage d'un événement encrypté par un ou des mots de contrôle (CW) dans une unité de réception et de décryptage (STB) connectée à une unité de sécurité (SC), ces mots de contrôle (CW) et les conditions d'accès à cet événement étant contenus dans des messages de contrôle (ECM), **caractérisée en ce qu'**elle comprend les étapes consistant à :
- stocker l'événement encrypté ainsi que le ou les messages de contrôle (ECM) sur une unité de stockage,
- transmettre à l'unité de sécurité (SC), les messages de contrôle (ECM),
- vérifier si les droits d'accès à cet événement sont contenus dans l'unité de sécurité (SC),
- former une quittance (Q) contenant des informations destinées au traitement de l'événement en mode reproduction, cette quittance (Q) comprenant une signature (SGN) sur tout ou partie du message de contrôle (ECM) grâce à une clé secrète (K) contenue dans l'unité de sécurité (SC) et propre à chaque unité de sécurité, cette quittance étant telle que lors de l'utilisation subséquente de l'événement, l'authenticité de ladite quittance est vérifiée prioritairement avant de vérifier les droits usuels dans l'unité de sécurité;
- stocker cette quittance (Q) dans l'unité de stockage.

2. Méthode selon la revendication 1, **caractérisé en ce que** l'authentification de la quittance comporte les étapes suivantes :
- détermination à partir de tout ou partie du message de contrôle d'une signature,
- comparaison de ladite signature avec ladite signature (SGN) de la quittance,
- application des conditions énoncées dans la partie condition de la quittance si la comparaison indique que les deux valeurs sont identiques.

3. Méthode selon la revendication 1, **caractérisée en ce que** la présence de ladite quittance pour un message de contrôle donné permet d'ignorer les conditions d'accès.

4. Méthode selon la revendication 1, **caractérisée en ce que** la quittance (Q) comprend en plus une partie conditionnelle (CD) décrivant des nouvelles conditions indépendantes de la configuration structurelle de la diffusion de l'événement.

5. Méthode selon la revendication 4, **caractérisée en ce que** la présence de ladite quittance pour un message de contrôle donné permet d'utiliser les conditions d'accès contenues dans ladite partie conditionnelle (CD), en lieu et place des conditions d'accès associées audit message de contrôle.

6. Méthode selon la revendication 1, **caractérisée en ce que** la quittance (Q) n'est calculée que si les droits d'accès sont présents dans l'unité de sécurité.

## Claims

1. Method for storing an event encrypted by one or several control words (CW) in a reception and decryption unit (STB) connected to a security unit (SC), said control words (CW) and the necessary rights for the access to this event being contained in control messages (ECM), **characterized in that** it comprises the following steps :
- storing the encrypted event as well as the control message or messages (ECM) in a storage unit,
- transmitting the control messages (ECM) to the security unit (SC),
- verifying if the access rights to this event are contained in the security unit (SC),
- forming a receipt (Q) containing information intended for the processing of the event in reproduction mode, said receipt (Q) comprising a signature (SGN) based on all or a part of the control message (ECM) using a secret key (K) contained in the security unit (SC) and specific to each security unit, said receipt being such that, when the event is subsequently used, the authenticity of said receipt is verified in priority before verifying the usual rights in the security unit;
- storing this receipt (Q) in the storage unit.

2. Method according to claim 1, **characterized in that** the authentication of the receipt comprises the following steps :
- determining a signature from all or part of the control message;
- comparing said signature with the signature (SGN) of the receipt;
- applying the conditions contained in the conditional part of the receipt if the comparison indicates that both values are identical.

3. Method according to claim 1, **characterized in that** the presence of said receipt for a given control message enables to ignore the access conditions.

4. Method according to Claim 1, **characterized in that** the receipt (Q) further comprises a conditional part (CD) describing new conditions independent of the structural configuration of the transmission of the event.

5. Method according to Claim 4, **characterized in that** the presence of said receipt for a given control message enables using the access conditions contained in said conditional part (CD) instead of the access conditions associated to said control message.

6. A method according to Claim 1, **characterized in that** the receipt (Q) is only calculated if the access rights are present in the security unit.

## Patentansprüche

1. Speicherverfahren für ein Ereignis, das durch ein oder mehrere Kontrollwörter (CW) in einer Empfangs-und Entschlüsselungseinheit (STB) verschlüsselt ist, die mit einer Sicherheitseinheit (SC) verbunden ist, wobei diese Kontrollwörter (CW) und die Zugangsbedingungen für dieses Ereignis in Kontrollnachrichten (ECM) enthalten sind, **gekennzeichnet dadurch, dass** es folgende Phasen umfasst:
- Speichern des verschlüsselten Ereignisses sowie der Kontrollnachricht(en) (ECM) in einer Speichereinheit,
- Übertragung der Kontrollnachrichten (ECM) an die Sicherheitseinheit (SC),
- Nachprüfung, ob die Zugangsrechte zu diesem Ereignis in der Sicherheitseinheit (SC) enthalten sind,
- Bildung einer Quittung (Q), die Informationen für die Behandlung des Ereignisses im Reproduktionsmodus enthält, wobei diese Quittung (Q) eine Unterschrift (SGN) auf der ganzen Kontrollnachricht oder einem Teil davon (ECM) umfasst, dank eines geheimen Schlüssels (K) in der Sicherheitseinheit (SC), der jeder Sicherheitseinheit eigen ist, wobei bei der nachfolgenden Benutzung des Ereignisses die Authentifizierung der Quittung vorrangig nachgeprüft wird, bevor man die gewöhnlichen Rechte in der Sicherheitseinheit prüft;
- Speichern dieser Quittung (Q) in der Speichereinheit.

2. Verfahren nach Anspruch 1, **gekennzeichnet dadurch, dass** die Authentifizierung der Quittung die folgenden Schritte umfasst:
Ermittlung einer Unterschrift ausgehend von der ganzen Kontrollnachricht oder einem Teil davon,
Vergleich der Unterschrift mit der Unterschrift (SGN) der Quittung,
Anwendung der Bedingungen in dem Teil Bedingung der Quittung wenn der Vergleich ergibt, dass die beiden Werte identisch sind.

3. Verfahren nach Anspruch 1, **gekennzeichnet dadurch, dass** das Vorhandensein besagter Quittung für eine gegebene Kontrollnachricht es gestattet, die Zugangsbedingungen zu ignorieren.

4. Verfahren nach Anspruch 1, **gekennzeichnet dadurch, dass** die Quittung (Q) außerdem ein Bedingungsteil (CD) umfasst, das neue Bedingungen beschreibt, die unabhängig von der strukturellen Ausgestaltung der Übertragung des Ereignisses sind.

5. Verfahren nach Anspruch 4, **gekennzeichnet dadurch, dass** das Vorhandensein von besagter Quittung für eine gegebene Kontrollnachricht es gestattet, die Zugangsbedingungen in besagtem Bedingungsteil (CD) zu benutzen anstelle der Zugangsbedingungen, die der genannten Kontrollnachricht zugeordnet sind.

6. Verfahren nach Anspruch 1, **gekennzeichnet dadurch, dass** die Quittung (Q) nur dann berechnet wird, wenn die Zugangsrechte in der Sicherheitseinheit vorhanden sind.
